# EUROPÄISCHE PATENTSCHRIFT

(11) **EP 1 363 990 B1**
(45) Veröffentlichungstag und Bekanntmachung des Hinweises auf die Patenterteilung: **06.06.2007**
(21) Anmeldenummer: 02702276.3
(22) Anmeldetag: 17.01.2002
(51) Int. Cl.: C12C 13/00, B67D 5/60, F16L 41/02

(54) **VERFAHREN UND VORRICHTUNG ZUM BETRIEB VON TANKLAGERSYSTEMEN IM FESTVERROHRTEN VERBUND MIT ROHRSYSTEMEN FÜR FLÜSSIGKEITEN**
METHOD AND DEVICE FOR OPERATING TANK FARM SYSTEMS WHICH ARE INTERCONNECTED WITH PIPES IN A FIXED MANNER AND WHICH HAVE PIPE SYSTEMS FOR LIQUIDS
PROCEDE ET DISPOSITIF POUR ACTIONNER DES SYSTEMES DE RESERVOIRS DE STOCKAGE DANS UN SYSTEME COMBINE TUBE FIXE COMPORTANT DES SYSTEMES TUBULAIRES POUR LIQUIDES

(30) Priorität: 21.02.2001 DE 10108259
(43) Veröffentlichungstag der Anmeldung: 26.11.2003
(73) Patentinhaber: TUCHENHAGEN GmbH, 21514 Büchen (DE)
(72) Erfinder: WORCZINSKI, Günter, 21514 Büchen (DE)
(74) Vertreter: Hauck Patent- und Rechtsanwälte
(86) Internationale Anmeldenummer: PCT/EP2002/000432
(87) Internationale Veröffentlichungsnummer: WO 2002/066593

(56) Entgegenhaltungen:
- DE-A- 3 516 128
- DE-U- 29 821 813
- GB-A- 2 077 759
- US-A- 4 344 453
- US-A- 4 710 355
- US-A- 4 730 651
- US-A- 5 085 241

## Beschreibung

### TECHNISCHES GEBIET

Die Erfindung betrifft ein Verfahren und eine Vorrichtung zum Betrieb von Tanklagersystemen im festverrohrten Verbund mit Rohrsystemen für Flüssigkeiten, insbesondere zur Anwendung in hohen mikrobiologischen Qualitätsanforderungen unterliegenden Anlagen zur Produktbearbeitung und zum Produkttransfer in der Nahrungsmittel- und Getränkeindustrie, der Pharmazie und der Biotechnologie. Ein solches System ist zum Beispiel aus **GB-A-2 077 759** bekannt.

Die mikrobiologischen Anforderungen, die heute an Produktionsanlagen im Bereich der Nahrungsmittel- und Getränkeindustrie, der Pharmazie und der Biotechnologie gestellt werden, wachsen in dem Maße, wie die Messmethoden zur Feststellung mikrobiologischer Belastungen verbessert und die Nachweisgrenzen für Substanzen jedweder Art reduziert werden. Als typisches Beispiel, stellvertretend für andere Anwendungen, seien im folgenden Fermentationsprozesse (z.B. der Gärbereich in Brauereien) genannt. Hier treten Probleme auf, wenn durch den Aufbau und die Anordnung der Verrohrung zwischen Gärtanks und deren Peripherie im Zusammenspiel mit den Produktionsabläufen Situationen entstehen, die ein Umfeld schaffen, welches Keimwachstum begünstigt. Die heute auf diesem Gebiet zur Anwendung kommenden Verrohrungskonzepte im Zusammenhang mit einem Tanklagersystem bergen diesbezügliche Gefahrenpotentiale, welche bereits bei der Basisplanung derartiger Anlagen zu beachten und nach Möglichkeit auszuschließen sind. Nachfolgend werden die heute favorisierten Verrohrungskonzepte kurz dargestellt, und es wird aufgezeigt, wo Handlungsbedarf mit Blick auf die immer höher werdenden mikrobiologischen Qualitätsanforderungen bestehen.

### STAND DER TECHNIK

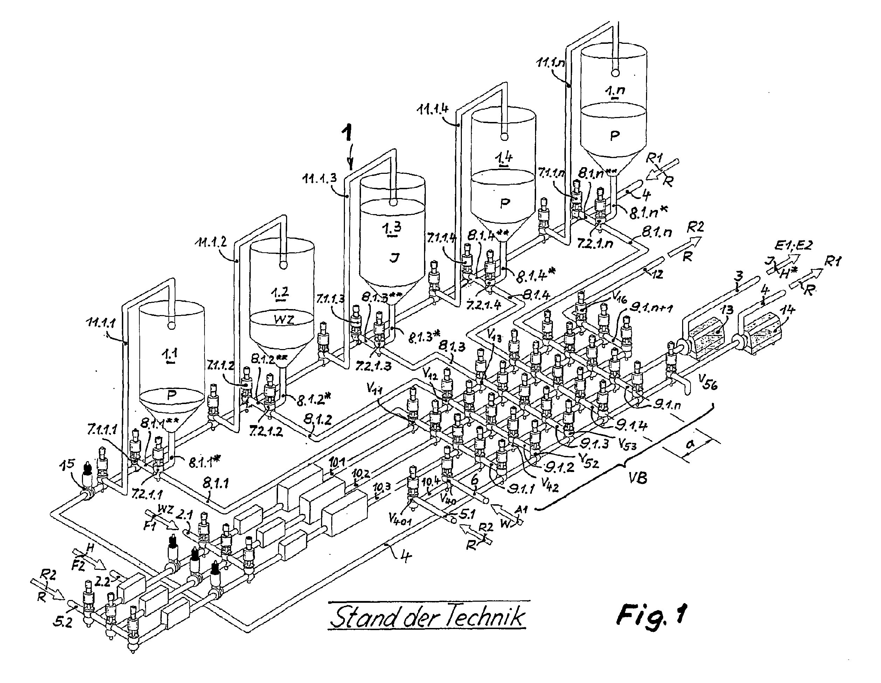

Der einschlägige und wohl am weitesten verbreitete Stand der Technik auf dem vorgenannten Gebiet sei nachfolgend am Beispiel eines Tanklagersystems 1 **(Figur 1**) einer Brauerei dargestellt, welches aus fünf Gärtanks 1.1 bis 1.n besteht. Deren Zahl ist ohne weiteres erweiterbar, weshalb der fünfte Tank die Bezeichnung 1.n trägt. Jeder der Tanks 1.1 bis 1.n ist jeweils mit einer ersten Rohrleitung Füllen 2.1 (sog. Funktionsleitung) für Füllen F1 (Würze WZ) und einer zweiten Rohrleitung Füllen 2.2 für Füllen F2 (Hefe H), einer Rohrleitung Entleeren 3 für Entleeren E1 (Jungbier J) oder für Entleeren E2 (Hefeabzug H*), einer Rohrleitung Reinigung 4 für Tank-/Rohrreinigung R1 (Reinigungsmittel R) und einer Ablaufleitung Rohrreinigung 12 für Rohrreinigung R2 (Reinigungsmittel R) verbunden. Die Anschlussstellen, an denen sich unverträgliche Medien gegenüberstehen können (Produkt P allgemein, steht beispielsweise für Würze WZ oder Hefe H oder Jungbier J, und jeweils Reinigungsmittel R), sind mit sogenannten vermischungssicheren Ventilen ausgerüstet. Im vorliegenden Beispiel ist dies ein zweites Ventil 7.2.1.1 bis 7.2.1.n, das jeweils eine Tankauslaufleitung 8.1.1* bis 8.1.n*, in der sich der jeweilige Tankinhalt des Tanks 1.1 bis 1.n befindet, von einer zu einem sogenannten Ventilblock VB führenden jeweiligen Auslaufleitung 8.1.1 bis 8.1.n trennt. Das Ausführungsbeispiel gemäß Figur 1 stellt bereits eine weiterentwickelte Verrohrungsvariante dar; einfachere Varianten werden nachfolgend kurz umrissen.

Die einfachste Verrohrung, die nicht dargestellt ist, besteht darin, die Funktionen Füllen F1, F2, Entleeren E1, E2 und Tank- und Rohrreinigung R1, R2 im zentralen Ventilblock VB zusammenzufassen und die Tankauslaufleitungen 8.1.1* bis 8.1.n* in unterschiedlichen Längen zu diesem Ventilblock VB zu führen, ohne Zwischenschaltung der vorstehend erwähnten zweiten Ventile 7.2.1.1 bis 7.2.1.n. Durch eine solche Anordnung ergibt sich zwar zwischen sogenannten Traversen 9.1.1 bis 9.1.n+1 des Ventilblockes VB ein relativ kurzer Traversenabstand a, zum einzelnen Tank 1.1 bis 1.n jedoch jeweils teilweise eine sehr lange Tankauslaufleitung 8.1.1 * bis 8.1.n*. Bei einer derartigen Installationsform sind die Tankauslaufleitung 8.1.1* bis 8.1.n* und die jeweils zugeordnete Traverse 9.1.1 bis 9.1.n des Ventilblocks VB Bestandteil des jeweiligen Tanks 1.1 bis 1.n. Von Nachteil ist hierbei, dass der Tankinhalt des jeweiligen Tanks 1.1 bis 1.n zwangsläufig auch jeweils Inhalt der zugeordneten Tankauslaufleitung 8.1.1^{*} bis 8.1.n* und der sich anschließenden Traverse 9.1.1 bis 9.1.n ist, und dass aufgrund der Geometrie- und Anordnungsverhältnisse dieser Bereich nur sehr eingeschränkt am Behandlungsprozess (im Ausführungsbeispiel am Gärprozess) im Tank 1.1 bis 1.n teilnimmt, wodurch dort auch nur ein beschränkter Stoffaustausch stattfindet.

Die vorstehenden Nachteile können etwas abgemildert werden, wenn die Tankauslaufleitungen 8.1.1* bis 8.1.n* mit möglichst großem Gefälle zum Ventilblock VB verlegt werden. Dadurch entstehen infolge der zum jeweiligen Tank 1.1 bis 1.n innerhalb der jeweils zugeordneten Tankauslaufleitung 8.1.1* bis 8.1.n* aufsteigenden Gasblasen eine gewisse Konvektion und somit eine den Stoffaustausch begünstigende Rührwirkung.

Die Hauptproblematik des mit dem Ventilblock VB festverrohrten Tanks 1.1 bis 1.n, der dabei nicht jeweils in seiner zum Ventilblock VB führenden Tankauslaufleitung 8.1.1* bis 8.1.n* abtrennbar ist, besteht jedoch im wesentlichen darin, dass ein Ausschub des Produktes P und eine separate Reinigung R1 der Tankauslaufleitungen 8.1.1* bis 8.1.n* und der zugeordneten Traversen 9.1.1 bis 9.1.n nicht möglich sind.

Wird beispielsweise bei einer derartigen Anordnung der Tank 1.2 mit Würze WZ befüllt, dann füllen sich ebenfalls das Ende der Fülleitung (hier erste Rohrleitung Füllen 2.1) zwischen den Ventilen V₁₂ und V₁₆ des Ventilblocks VB und das Ende der Traverse 9.1.2 zwischen dem Ventil V₁₂ und einem Ventil V₅₂. Diese Leitungsinhalte lassen sich praktisch nicht ausschieben, auch dann nicht, wenn ein sogenannter Ausschub A1, ausgehend von einer Rohrleitung Ausschub 6, bis in den Tank, im vorliegenden Fall wäre dies der Tank 1.2, geführt würde. Dadurch befindet sich in der Traverse 9.1.2 ein undefinierbares Gemisch aus Würze WZ, ggf. Hefe H, wenn nach der Würzebefüllung Hefe H dosiert wurde, und Ausschubwasser W. Dieses Gemisch bleibt dort, bis der Tank 1.2 nach einigen Tagen wieder entleert und gereinigt wird.

Aus den brauereitechnologischen Zusammenhängen ist bekannt und auch nicht auszuschließen, dass sich in der Würze WZ Keime befinden, die nicht feststellbar sind, solange sie durch ein aktives Umfeld der Hefe H unterdrückt werden. Diese schlummernden Keime beginnen sich allerdings zu vermehren, sobald sich günstige Bedingungen für eine diesbezügliche Vermehrung einstellen. Derartige Bedingungen werden beispielsweise dadurch geschaffen, dass infolge der täglich stattfindenden Heißreinigung (85 bis 90 °C) der Funktionsleitungen eine Erwärmung des sich in der jeweiligen Traverse 9.1.1 bis 9.1.n befindlichen Gemisches aus Würze WZ, Hefe H und Ausschubwasser W erfolgt. Es werden dann dort leicht Temperaturen bis 35 °C erreicht, so dass dadurch, je nach Keimstamm, optimale Verhältnisse zur Vermehrung der Keime entstehen, zumal die Hefe H nach dem Erreichen des Endvergärungsgrades nicht mehr aktiv ist und sich absetzt. Dadurch stellt sie ihr keimunterdrückendes Verhalten ein. Die sich so unkontrolliert vermehrenden und praktisch nicht erreichbaren Keime werden durch die nachfolgenden Entleerungs-, Hefezieh- und Umpumpvorgänge in andere Tanks und Produktionsbereiche verschleppt und belasten das Produkt.

Die in **Figur 1** dargestellte, gegenüber der vorstehenden einfacheren Verrohrungsvariante weiterentwickelte Variante erlaubt es, einen Abschnitt der Auslaufleitung 8.1.1** bis 8.1.n** und die sich jeweils anschließende Auslaufleitung 8.1.1 bis 8.1.n, unabhängig von der Reinigung des jeweiligen Tanks 1.1 bis 1.n, über eine Zulaufleitung Tankreinigung 11.1.1 bis 11.1.n einer separaten Rohrreinigung R1 zu unterziehen. Dies wird jeweils durch ein erstes Ventil 7.1.1.1 bis 7.1.1.n und das zweite Ventil 7.2.1.1 bis 7.2.1.n erreicht, von denen das erste den ersten Abschnitt der Auslaufleitung 8.1.1** bis 8.1.n** von der Rohrleitung Reinigung 4 und das zweite, das diesen Abschnitt von der jeweils nachfolgenden Auslaufleitung 8.1.1 bis 8.1.n trennt, die jeweils zugeordnete Tankauslaufleitung 8.1.1* bis 8.1.n* von den erwähnten Auslaufleitungen 8.1.1** bis 8.1.n** abtrennen.

Bei entsprechender Gestaltung der Anlagenperipherie und wenn es das zeitliche Produktionsablaufschema erlaubt, kann diese Rohrreinigung R1 traversenweise nach jedem Befüll- und Entleerungsvorgang oder einmal am Tag mittels Durch takten aller Auslaufleitungen 8.1.1 bis 8.1.n zusammen mit den Traversen 9.1.1 bis 9.1.n in jeder Reinigungsphase des Tank- und Rohrleitungssystems durchgeführt werden.

### Die Reinigung der Traverse 9.1.3 gestaltet sich beispielsweise wie folgt:

Über die Rohrleitung Reinigung 4 wird das Reinigungsmittel R im Zuge der Rohrreinigung R1 herangeführt. Es gelangt über das erste Ventil 7.1.1.3 in den Abschnitt der Auslaufleitung 8.1.3.**, von dort über das zweite Ventil 7.2.1.3 in die Auslaufleitung 8.1.3 und schließlich in die Traverse 9.1.3, um von dort über das Ventil V₅₃ des Ventilblocks VB in die Leitung 4 zu gelangen und anschließend über eine zweite Pumpe 14 das dargestellte Verrohrungssystem zu verlassen.

Die Leitungen 10.1 bis 10.3, die die Traversen 9.1.1 bis 9.1.n+1 kreuzen, sind durch eine Rohrreinigung R2 reinigbar, die durch Zufuhr von Reinigungsmittel R über eine zweite Zulaufleitung Rohrreinigung 5.2 und mittels wahlweiser Schaltung nicht näher bezeichneter Ventile beaufschlagt werden. Das Reinigungsmittel R verlässt bei dieser Rohrreinigung R2 das Rohrsystem über die Ablaufleitung Rohrreinigung12. Eine Absperrklappe 15 ermöglicht es, Tank- und Traversenreinigung R1 über die Rohrleitung Reinigung 4 durchzuführen, ohne diese Leitung zwischen dem Tank 1.1 und der zweiten Pumpe 14 gleichfalls mit Reinigungsmittel R fluten zu müssen.

Die Reinigung der vierten Leitung 10.4 (Rohrreinigung R2), die über eine erste Pumpe 13 in die Rohrleitung Entleeren 3 ausmündet, wird durch Zufuhr von Reinigungsmittel R über eine erste Zulaufleitung Rohrreinigung 5.1 beaufschlagt. Auf dem Weg in die vierte Leitung 10.4 passiert das Reinigungsmittel R zunächst ein der Ventilmatrix vorgeordnetes zweites Ventil V₄₀₁ und anschließend ein vorgeordnetes erstes Ventil V₄₀.

Man erkennt aus den vorstehend kurzgefassten Hinweisen zur Reinigung des Rohr- und Tanklagersystems 1, dass durch Anordnung einer Vielzahl von Ventilen und zusätzlicher Rohrleitungsabschnitte im wesentlichen alle Bereiche des vernetzten Rohrsystems gereinigt werden können.

Aber auch das in **Figur 1** dargestellte Verrohrungssystem bekannter Art führt zu unausgeschobenen Bereichen innerhalb des Ventilblocks VB. Unausgeschobenes Produkt P wird bei der nachfolgenden Reinigung ausgespült und damit zum Produktverlust. Anhand der vorstehend erwähnten Befüllung des Tank 1.2 mit Würze WZ über die erste Rohrleitung Füllen 2.1 soll kurz aufgezeigt werden, worin in diesem konkreten Fall der erwähnte Produktverlust besteht. Über Zufuhr von Ausschubwasser W im Wege des Ausschubs A1 über die Rohrleitung Ausschub 6 lässt sich jene Würze WZ , die in den Auslaufleitungen 8.1.2** und 8.1.2 und der sich anschließenden Traverse 9.1.2 bis einem Ventil V₄₂ ansteht, in den Tank 1.2 ausschieben. Der Inhalt der Traverse 9.1.2 im Bereich zwischen den Ventilen V₄₂ und V₅₂ sowie der Inhalt der Rohrleitung 10.1 im Bereich zwischen den Ventilen V₁₂ und V₁₆ ist durch den vorgenannten Ausschub A1 über die Rohrleitung Ausschub 6 nicht zu erfassen. Die Würze WZ in diesen Rohrleitungsbereichen ist somit verloren.

Durch zusätzlichen Installationsaufwand, mit dem ein sogenannter "Gegenausschub" möglich wird, kann auch dieser Verlust in den genannten Leitungsabschnitten, die mit der ersten Rohrleitung Füllen 2.1 in Verbindung stehen, reduziert werden. Eine derartige Maßnahme ist aber meist nur lohnend bei sehr langen Leitungen innerhalb des Ventilblocks VB.

Darüber hinaus sind weitere Maßnahmen bekannt, durch die der Produktverlust weiter reduziert werden kann. Eine dieser Maßnahmen besteht darin, die in Frage kommenden gesamten Leitungen über einen sogenannten "Ringausschub" auszuschieben, wodurch keine nennenswerten "toten Enden" im Rohrleitungssystem entstehen. "Gegenausschub" oder "Ringausschub" erfordern in jedem Falle einen beträchtlichen Installationsaufwand. Bei derartigen Lösungen werden die Traversen des Ventilblocks VB sowie die von den Tanks fortführenden Auslaufleitungen, immer unabhängig von der Tankreinigung, als reine Rohrreinigung gereinigt. Um zeitliche Einschränkungen zu vermeiden, da die Tankreinigung die Auslaufleitung belegt, ist die Tankreinigungsrückführung direkt am Tank angeschlossen und benutzt die Auslaufleitung nicht.

Die Anordnung zur Realisierung des vorgenannten "Ringausschubes" unterliegt gewissen Einschränkungen, da die Ringleitung am Ventilblock VB nur für einen Reinigungsvorgang zur Zeit genutzt werden kann. Einschränkungen lassen sich nur durch zeitlich abgestimmtes Produktionsmanagement oder durch Installation einer weiteren Ringleitung vermeiden.

Abschließend seien zusammenfassend die wesentlichen Nachteile genannt, die allen Tanklagersystemen zu eigen sind, die im festverrohrten Verbund mit Ventilblöcken VB arbeiten, in denen eine Vielzahl von Ventilen in Form einer Matrix angeordnet sind:
- Hinter den Verzweigungspunkten derartiger Ventile sind Rohrleitungsteile nachgeschaltet, aus denen üblicherweise das Produkt P nicht ausgeschoben werden kann (Beispiel: Abschnitt der Auslaufleitung 8.1.2**; Abschnitt der ersten Leitung 10.1 im Bereich V₁₂ bis V₁₆; Traverse 9.1.2 im Bereich V₄₂ bis V₅₂).
- Es entsteht in den sogenannten "toten Enden" oft eine undefinierte Mischung aus verschiedenen Produkten P (WZ, H, J) und Ausschubwasser W.
- Das unausgeschobene Produkt P wird spätestens bei einer nachfolgenden Reinigung zum Verlust.
- Undefinierte Produktmischungen verursachen je nach Zusammensetzung negative Belastungen des gewünschten Produktes P, da unkontrollierte Prozesse ablaufen können. Derartige Prozesse können zu unerwünschtem Keimwachstum führen.
- Durch Temperaturerhöhung infolge beispielsweise heißer Reinigungsvorgänge wird in den Traversen des Ventilblocks ein Umfeld geschaffen, welches unerwünschtes Keimwachstum fördert.
- Insbesondere in waagerecht angeordneten Ventilblöcken und bei langen Leitungen nimmt das darin enthaltene Produkt P nicht an dem Verarbeitungsprozess im Tank teil. Es findet somit in den in Frage kommenden Rohrleitungsabschnitten kein oder nur ein geringer Stoffaustausch statt.
- Um in den vorstehend erläuterten klassischen Ventilmatrizen Bereiche unausgeschobenen Produktes P zu vermeiden, die Produktverluste zu verringern und diese Bereiche auch bei gefülltem Tank separat reinigbar zu machen, ist ein sehr großer Aufwand in der Peripherie der Ventilmatrix erforderlich, der in den meisten Fällen aus Kostengründen nicht realisiert werden kann und der zu sehr unübersichtlichen und wartungsunfreundlichen Rohrsystemen führt. Aus diesen Gründen werden bei der praktischen Lösung der Probleme Kompromisslösungen gefunden, die mehr oder weniger ausgeprägte Einschränkungen aufweisen.
- Die bei der Tankreinigung in die Tankauslaufleitung und die sich anschließende Auslaufleitung in Verbindung mit der Traverse eingedrungene Luft verhindert eine ordnungsgemäße Reinigung des Rohrleitungssystems.

In der Firmendruckschrift **"TUCHENHAGEN Journal drinktec interbrau '93,** München 24.9.-01.10.1993; Abschnitt 15 (D), wird mit Blick auf die in den vorstehend beschriebenen Ventilblöcken VB zur Anwendung kommenden leckagegesicherten Ventile ein neues Doppelsitzventil vorgestellt, das hinsichtlich Leckagesicherheit bei der sog. Liftreinigung (Sitzreinigung durch Teiloffenstellung des jeweils zugeordneten Schließgliedes) und hinsichtlich der Kontrollmöglichkeit des Reinigungszustandes im Inneren des Leckagehohlraumes jeweils gegenüber dem Stand der Technik, wie er beispielsweise aus der nachstehend genannten **US 4,436,106** bekannt ist, verbessert wurde. Bei dem in der Firmendruckschrift **D** beschriebenen neuen Doppelsitzventil entfällt in der Variante des sog. "K"-Ventils das auf der dem Antrieb gegenüber liegenden Seite aus dem Ventilgehäuse herausgeführte Leckagerohr. Bei der Axial/Radial-Konfiguration der Sitzdichtungen der beiden Schließglieder kann dieses K-Ventil horizontal angeordnet und der Leckagehohlraum restlos durch einen Druckentlastungsanschluss drainiert werden.

In der Firmendruckschrift **D** wird gezeigt, dass es möglich ist, zwei dieser speziellen K-Ventile an einer aus einem stehenden Tank senkrecht nach unten herausgeführten Rohrleitung gegenüberliegend anzuordnen. Dadurch ergibt sich bei der Verrohrung stehender Tanks eine sehr kompakte, kostengünstige und hinsichtlich der Reinigung des Tankauslaufs ideale Anordnung.

Um zu dokumentieren, wie kompakt eine Vielzahl von K-Ventilen an einer Rohrleitung angeordnet werden können, wenn jeweils zwei dieser Ventile gegenüberliegend angeordnet werden, ist auf der Titelseite der Firmendruckschrift **D** ein Exponat dargestellt, das an einem senkrecht orientierten Rohrstutzen, der sich nach oben kegelförmig erweitert, vier horizontal diesbezüglich angeordnete K-Ventile aufweist. Dieses Exponat wird in der gesamten Firmendruckschrift D nicht weiter thematisiert.

Auch die vorstehend erwähnte Anordnung von zwei an einer aus einem Tankboden senkrecht herausgeführten Rohrleitung gegenüberliegend angeordneten K-Ventilen wird mit Blick auf die grundsätzliche Eignung einer diesbezüglichen Anordnung im Rahmen von Tanklagersystemen im festverrohrten Verbund mit Rohrsystemen für Flüssigkeiten nicht weiter thematisiert. Der Fachwelt wird daher durch die Firmendruckschrift **D** kein konkreter Hinweis gegeben, wie mit der in Rede stehenden Anordnung der K-Ventile die vorstehend referierten Nachteile, die allen Tanklagersystemen zu eigen sind, die im festverrohrten Verbund mit Ventilblöcken VB arbeiten, in denen eine Vielzahl von Ventilen in Form einer Matrix angeordnet sind, beseitigt werden können.

### ERFINDUNG

Aufgabe der Erfindung ist es, ein Verfahren zum Betrieb von Tanklagersystemen im festverrohrten Verbund mit Rohrsystemen für Flüssigkeiten zu schaffen, das hohe mikrobiologische Qualitätsanforderungen erfüllt und das es ermöglicht, die Vorrichtung zu seiner Durchführung einfacher als mit vergleichbaren bekannten Vorrichtungen auszugestalten.

Diese Aufgabe wird durch ein Verfahren mit den Merkmalen des Anspruchs 1 gelöst. Eine Vorrichtung zum Durchführen des Verfahrens ergibt sich aus den Merkmalen des Anspruchs 2 oder des Anspruchs 3, während vorteilhafte Ausführungsformen der vorgeschlagenen Vorrichtungen Gegenstand der Anspruch 2 oder 3 nachgeordneten Unteransprüche sind.

Der Erfindungsgedanke findet seinen Niederschlag bei einem aus mehr als einem Tank bestehenden Tanklagersystem, dem Flüssigkeiten aus dem Rohrsystem zugeführt werden, bei dem Flüssigkeiten aus dem Tank in das Rohrsystem abgeführt werden und bei dem die Zufuhr der Flüssigkeiten in den und die Abfuhr der Flüssigkeiten aus dem jeweiligen Tank von unten erfolgt. Der Kern der Erfindung besteht darin, dass die zu- oder abzuführenden Flüssigkeiten einen mit dem jeweiligen Tankinhalt in unmittelbarer Verbindung stehenden Raum unterhalb des jeweiligen Tanks durchströmen und dass die jeweilige Flüssigkeit in diesem Raum in unmittelbarer Nähe zu dessen Begrenzung von den an diesen Raum herangeführten Rohrleitungen des Rohrsystems wahlweise, schaltbar und vermischungssicher abtrennbar ist.

Durch die unmittelbare Heranführung sämtlicher Funktionsleitungen an einen Raum unterhalb des jeweiligen Tanks, der mit dem Tankinhalt in unmittelbarer Verbindung steht, werden sämtliche vorstehend im Zusammenhang mit dem Stand der Technik erwähnten Nachteile vermieden. Es entstehen keine unausgeschobenen Leitungsenden in einer vom Tank wegführenden Auslaufleitung. Die Rohrleitungen, die in unmittelbarer Nähe zur Begrenzung des Raumes von letzterem wahlweise, schaltbar und vermischungssicher abtrennbar sind, können mit einem Gegenausschub in den Tank ausgeschoben werden, so dass die Produktverluste auf ein Minimum reduziert oder gänzlich vermieden werden. Die in dem Raum befindliche Flüssigkeit steht in regem Stoffaustausch mit dem Tankinhalt, so dass dort keine unkontrollierten Prozesse ablaufen können. Eine signifikante Erwärmung der im Raum unterhalb des Tanks befindlichen Flüssigkeit infolge heißer Reinigung der an diesen Raum angeschlossenen Funktionsleitungen findet nicht statt, da der zwischen Tankinhalt und Inhalt des Raumes bestehende rege Stoffaustausch für eine Abführung der ggf. anfallenden Wärme sorgt.

Die Durchführung des Verfahrens setzt ein aus mehr als einem Tank bestehendes Tanklagersystem im Verbund mit einem aus wenigstens einer Rohrleitung bestehenden Rohrsystem voraus. Erfindungswesentliche Merkmale der beiden alternativ vorgeschlagenen Vorrichtungen zur Durchführung des Verfahrens sind ein jeweils im unteren Tankboden des jeweiligen Tanks ausmündender Ventilverteilerbaum, der vorzugsweise als langgestreckter Hohlkörper ausgebildet, der im wesentlichen senkrecht orientiert ist und der Anschlussöffnungen zum Verbinden seines Innenraumes mit jeder der Rohrleitungen besitzt, und ein jeweils in seinem Sitzbereich vermischungssicher ausgestaltete Ventil, das in jeder Verbindung zwischen der Rohrleitung und der zugeordneten Anschlussöffnung angeordnet ist und diese Verbindung in unmittelbarer Nähe zum Hohlkörper schaltet.

Die Rohrleitungsführung des Rohrsystems für mehrere Tanks wird dann besonders einfach und übersichtlich, wenn, wie dies eine erste Ausführungsform der vorgeschlagenen Vorrichtung vorsieht, eine erste Gruppe Rohrleitungen und eine zweite Gruppe Rohrleitungen in jeweils reihenförmiger Anordnung untereinander, auf einander gegenüberliegenden Seiten des Hohlkörpers, in zwei zueinander und zur Längsachse des Hohlkörpers parallelen Ebenen paarweise angeordnet und an diesem vorbeigeführt sind. Eine derartige Anordnung ist immer dann vorteilhaft, wenn die Tanks reihenförmig angeordnet sind.

Für den Fall, dass die Tanks beispielsweise in Form einer rechtwinkligen Matrix angeordnet sind, sieht eine zweite Ausführungsform der vorgeschlagenen Vorrichtung vor, dass eine erste Gruppe Rohrleitungen und eine zweite Gruppe Rohrleitungen jeweils untereinander, auf einander gegenüberliegenden Seiten des Hohlkörpers, in zueinander und zur Längsachse des Hohlkörpers parallelen Ebenen paarweise angeordnet und einander in einem Winkel von 90 Grand kreuzend an dem Hohlkörper vorbeigeführt sind. Durch diese Anordnung ist es möglich, einen Tank innerhalb der aus einer Vielzahl von Tanks bestehenden Ventilmatrix sowohl in der einen Anordnungsrichtung als auch in einer im Regelfall senkrecht hierzu orientierten Richtung, ausgehend jeweils vom erfindungsgemäßen Hohlkörper, zu verrohren.

Der langgestreckte Hohlkörper fungiert quasi als extrem kurze Tankauslaufleitung. Er ermöglicht es, die an ihm angeschlossenen Rohrleitungen in unmittelbarer Nähe zu seiner inneren Begrenzung mit geeigneten, vermischungssicher ausgestalteten Ventilen wahlweise und schaltbar abzutrennen. Dadurch bilden sich keine unausgeschobenen Leitungsenden. Das Produkt aus der dem Verzweigungspunkt hinter dem jeweiligen Ventil abgewandten Rohrleitungsstrecke kann mit einem "Gegenausschub" in den Hohlkörper und damit in den sich unmittelbar anschließenden Tank geschoben werden. Die vorgeschlagene Anordnung ist platzsparend, kostengünstig, übersichtlich und wartungsfreundlich. Durch den geringen Installationsaufwand und die übersichtliche Anordnung ist die vorgeschlagene Vorrichtung weniger anfällig für Fehler.

Da sich der Boden des jeweiligen Tanks in der Regel nach unten verjüngt, ist der Hohlkörper an der tiefsten Stelle des jeweiligen Tankbodens angeordnet. Sofern die Tankbodenform axialsymmetrisch zur Längsachse des Tanks ausgeführt ist, was bei den meisten in der Praxis zur Anwendung kommenden Tankformen der Fall ist, wird die Längsachse des Hohlkörpers koaxial zur Längsachse des Tanks angeordnet. Die Ausführung des Hohlkörpers gestaltet sich besonders einfach, wenn er, wie dies weiterhin vorgeschlagen wird, als zylindrisches Rohr ausgebildet ist.

Der Hohlkörper lässt sich restlos entleeren und einwandfrei reinigen, wenn sein dem Tankboden abgewandtes unterstes Ende mit einer Rohrleitung für Reinigung verbunden ist.

Das Rohrsystem wird besonders übersichtlich und einfach, wenn die Rohrleitungen, gemäß einem weiteren Vorschlag, jeweils als durchgehende, allen Tanks eines Tanksystems in gleicher Funktion zugeordnete Rohrleitungen (Füllen F; Entleeren E; Tank-/Rohrreinigung R1, R2) ausgeführt sind.

Die wahlweise, schaltbare und vermischungssichere Abtrennung der jeweiligen Rohrleitung vom Hohlkörper erfolgt gemäß einer ersten Ausführungsform durch ein sogenanntes Doppelsitzventil, wie es beispielsweise aus der **US 4,436,106** oder dem **DE-U-77 02 634** bekannt ist. Dieses Doppelsitzventil verfügt über zwei relativ zueinander bewegbare Schließglieder, die zwischen sich einen sogenannten Leckagehohlraum begrenzen, der über wenigstens einen Verbindungsweg mit der Umgebung des Doppelsitzventils verbunden ist. Durch diese Ausgestaltung ist das Ventil vermischungssicher, so dass bei einem Defekt an einer der beiden Sitzdichtungen die jeweilige Flüssigkeit über diesen Defekt zwar in den Leckagehohlraum und von dort in die Umgebung des Doppelsitzventils, nicht jedoch im Leckagehohlraum einen Druck aufbauen und als Folge hiervon in das vom anderen Schließglied verschlossene Ventilgehäuseteil gelangen kann.

Bei einer zweiten Ausführungsform eines Doppelsitzventils, wie es in der **DE-C-37 01 027** beschrieben ist, ist ein schieberartig ausgebildetes, translatorisch verschiebbares Schließglied vorgesehen, das in Verbindung mit dem Ventilgehäuse zwei Abdichtungsstellen realisiert. Diese Abdichtungsstellen sind seriell und in zueinander parallelen Ebenen angeordnet. Das Ventil weist einen ventilgehäuseseitig angeordneten Leckagehohlraum auf, der einerseits mit der Umgebung des Ventils verbunden ist, der andererseits zwischen den Abdichtungsstellen in einen Innenraum des Ventils ausmündet und der in der Schließstellung des Ventils gegenüber dem Innenraum durch das mit den zwei Abdichtungsstellen zusammenwirkende Schließglied verschlossen ist. Die Besonderheit bei dem Ventil besteht weiterhin darin, dass der Mediumeintritt vom Innenraum zum Leckagehohlraum in anderen Stellungen als in der Schließstellung des Ventils wirkungsmäßig in gleicher Weise wie in der Schließstellung durch eine das Schließglied hinsichtlich seiner Wechselwirkung mit dem Leckagehohlraum substituierende Vorkehrung gesteuert wird. Bei dieser Vorkehrung handelt es sich vorzugsweise um ein ringförmiges Verschlussteil mit Innendurchgang, der gegenüber den Abdichtungsstellen die diesbezügliche Form und die Abmessungen des Schließgliedes aufweist und der zu dem Schließglied relativ beweglich in Richtung dessen Bewegungsfreiheitsgrad angeordnet ist. Dieses Doppelsitzventil lässt sich leckagefrei schaltend ausführen, die beiden Abdichtungsstellen sind durch zwei diskrete, ventilgehäuseseitig angeordnete Dichtungen realisierbar und der Leckagehohlraum ist auf sehr einfache Weise mit der Umgebung des Ventils zu verbinden und bei Bedarf sehr großzügig räumlich zu bemessen. Das Ventil ist relativ einfach aufgebaut und der Sitzbereich kann in extrem kurzem Abstand an den Innenraum des Verteilerbaumes herangeführt werden.

Eine dritte Ausführungsform sieht vor, die jeweilige Rohrleitung vom Innenraum des Hohlkörpers durch ein sogenanntes Doppeldichtventil abzusperren. Ein derartiges Doppeldichtventil ist, soweit es die Ausführung in seinem Sitzbereich betrifft, mit einem einzigen Schließglied ausgestattet, das über zwei in Hubrichtung beabstandete Sitzdichtungen verfügt, zwischen denen ein ringförmig umlaufender Leckagehohlraum angeordnet ist, der über wenigstens einen Verbindungsweg mit der Umgebung des Doppelsitzventils verbunden ist. Auch dieses Doppeldichtventil ist vermischungssicher, denn auch hier wird bei einem Dichtungsdefekt an einer der beiden Sitzdichtungen die über diese Dichtungsstelle in den Leckagehohlraum gelangende Flüssigkeit in die Umgebung des Doppeldichtventils abgeleitet und kann nicht unter Druck an der anderen Dichtung anstehen und ggf. in das benachbarte Ventilgehäuseteil eindringen (**DE-C-35 16 128**).

Die beiden vorgenannten vermischungssicheren Ventilarten (**US 4,436,106 bzw. DE-U-77 02 634** oder **DE-C-37 01 027; DE-C-35 16 128**) werden gemäß einem weiteren Vorschlag derart antriebsmäßig ausgestaltet, dass sie durch Teilhubbewegungen ihrer jeweiligen Schließglieder (Doppelsitzventile erster oder zweiter Art) bzw. ihres einen Schließgliedes (**DE-C-35 16 128**) einer Sitzreinigung unterworfen werden können. Damit ist es möglich, die an dem erfindungsgemäßen Verteilerbaum angeordneten vermischungssicheren Ventile der vorgenannten Art nicht nur einer Reinigung ihres Leckagehohlraums sowohl in der Schließ- als auch in der Offenstellung zu unterziehen (Doppelsitzventil) bzw. einer auf die Schließstellung beschränkten Reinigung des Leckagehohlraums (Doppeldichtventil), sondern auch einer Sitzreinigung der einen Abdichtungsstelle, wenn die jeweils andere Abdichtungsstelle in der Schließstellung verbleibt. Somit erlaubt die vorgeschlagene Vorrichtung sämtliche heute üblichen Ventilreinigungen im Sitzbereich des Ventils, wie sie auch bei herkömmlichen Ventilblöcken mit den vorgenannten Doppelsitz- bzw. Doppeldichtventilen möglich sind.

Schließlich kann die Abtrennung der jeweiligen Rohrleitung vom erfindungsgemäßen Hohlkörper auch durch ein sogenanntes Scheibenventil erfolgen, das mit zwei am dichtenden Umfang des scheibenförmigen Schließgliedes beabstandeten Dichtungen ausgebildet ist, zwischen denen sich ein ringförmig umlaufender Leckagehohlraum befindet, der über wenigstens einen Verbindungsweg mit der Umgebung des Scheibenventils verbunden ist. Die grundsätzliche Bauart eines derartigen vermischungssicher ausgestalteten Scheibenventils ist beispielsweise aus der **DE-A-22 29 978** bekannt. Mit einem derartigen Scheibenventil ist in der Schließstellung eine Reinigung des Leckagehohlraums möglich.

Um bei der erfindungsgemäßen Vorrichtung Produktverluste weitestgehend zu vermeiden, sieht ein weiterer Vorschlag vor, dass an jedem tanknahen Ende der am Hohlkörper angeordneten Rohrleitungen eine an sich bekannte Ventilanordnung zum Ausschub der Rohrleitungen vorgesehen ist.

### KURZBESCHREIBUNG DER ZEICHNUNGEN

Ausführungsbeispiele der Vorrichtung zum Durchführen des Verfahrens gemäß der Erfindung sind in **Fig. 2** bis **Fig. 6** der Zeichnung dargestellt und werden nachfolgend hinsichtlich Aufbau und Funktion beschrieben. Es zeigen
- **Figur 2**: in Form einer Perspektive eine reihenförmige Anordnung von drei Tanks eines Tanklagersystems, die mit der erfindungsgemäßen Vorrichtung in einer bevorzugten Ausführungsform ausgerüstet sind;
- **Figur 3**: in schematischer Darstellung die Anordnung gemäß **Figur 2** mit fünf Tanks im festverrohrten Verbund mit vier Rohrleitungen (Funktionsleitungen), wobei die Ventile am jeweiligen Ventilverteilerbaum als sogenannte Doppeldichtventile ausgeführt sind;
- **Figur 4**: ebenfalls in schematischer Darstellung die Anordnung gemäß **Figur 3**, wobei die unterschiedlichen Möglichkeiten des Ausschubs beispielhaft dargestellt sind;
- **Figur 4a**: in schematischer Darstellung und in Form eines Ausschnitts eine weitere, gegenüber der Anordnung gemäß **Figur 4** abgewandelte Ausführungsform der Ventilanordnung zum Ausschub der Rohrleitungen im Bereich des letzten Tanks, wobei die in diesem Bereich zur Anwendung kommenden Doppeldichtventile jenen im Bereich der Ventilverteilerbäume entsprechen;
- **Figur 5**: in schematischer Darstellung eine weitere Ausführungsform der vorgeschlagenen Vorrichtung gemäß **Figur 3**, wobei die an den jeweiligen Ventilverteilerbäumen angeordneten vermischungssicheren Ventile in Form von sogenannten Doppelsitzventilen erster Art ausgestaltet sind;
- **Figur 5a**: in schematischer Darstellung und in Form eines Ausschnitts eine weitere, gegenüber der Anordnung gemäß **Figur 5** abgewandelte Ausführungsform der Ventilanordnung zum Ausschub der Rohrleitungen im Bereich des letzten Tanks, wobei die in diesem Bereich zur Anwendung kommenden Doppelsitzventile,jenen im Bereich der Ventilverteilerbäume entsprechen und
- **Fig. 6**: einen Meridianschnitt durch einen Verteilerbaum, der mit Doppelsitzventilen zweiter Art ausgerüstet ist.

### DETAILLIERTE BESCHREIBUNG

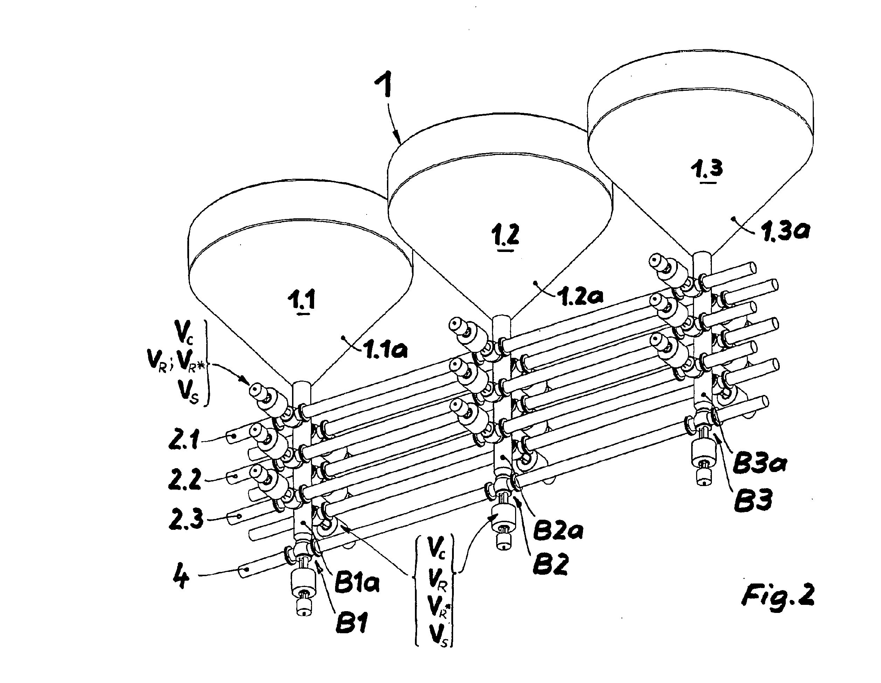

**Figur 2** zeigt ein Tanklagersystem 1, welches aus drei Tanks 1.1, 1.2 und 1.3 in reihenförmiger Anordnung besteht. Jeder Tankboden 1.1 a, 1.2a, 1.3a des jeweiligen Tanks 1.1, 1.2, 1.3 mündet an seinem unteren Ende jeweils in einen Ventilverteilerbaum B1, B2, B3 aus, der vorzugsweise als langgestreckter Hohlkörper B1a, B2a, B3a in Form eines zylindrischen Rohres ausgebildet ist. Die Längsachse des Hohlkörpers B1a, B2a, B3a ist senkrecht orientiert und koaxial zur Längsachse des jeweiligen Tanks 1.1 bis 1.3 ausgerichtet. An dem dem Tankboden 1.1 a bis 1.3a abgewandten untersten Ende des jeweiligen Hohlkörpers B1 a bis B3a ist die Rohrleitung Reinigung 4 angeordnet, die alle Hohlkörper B1a bis B3a durchgehend miteinander verbindet. Eine erste Gruppe Rohrleitungen, in der Rohrleitungen 2.1, 2.2 und 2.3 reihenförmig untereinander und in einer Ebene parallel zur Längsachse des Hohlkörpers B1 a bis B3a angeordnet sind, werden in kürzestmöglichem Abstand zu letzterem vorbeigeführt. In gleicher Weise ist eine zweite Gruppe Rohrleitungen, bestehend aus den Rohrleitungen 3.1, 3.2 und 3.3, am Hohlkörper B1a bis B3a angeordnet, und zwar derart, dass ihre Anordnungsebene parallel zur Anordnungsebene der ersten Gruppe von Rohrleitungen 2.1, 2.2, 2.3 und auf der letzterer abgewandten Seite des Hohlkörpers B1 a bis B3a verläuft. Dabei sind sämtliche Rohrleitungen 2.1 bis 3.3 durchgehend an den Hohlkörpern B1a bis B3a vorbeigeführt und jeweils mit einem vermischungssicher ausgestalteten Ventil V_{C}, V_{R}, V_{R*} oder V_{S} wahlweise und schaltbar mit dem jeweiligen Innenraum des Hohlkörpers B1a bis B3a verbunden.

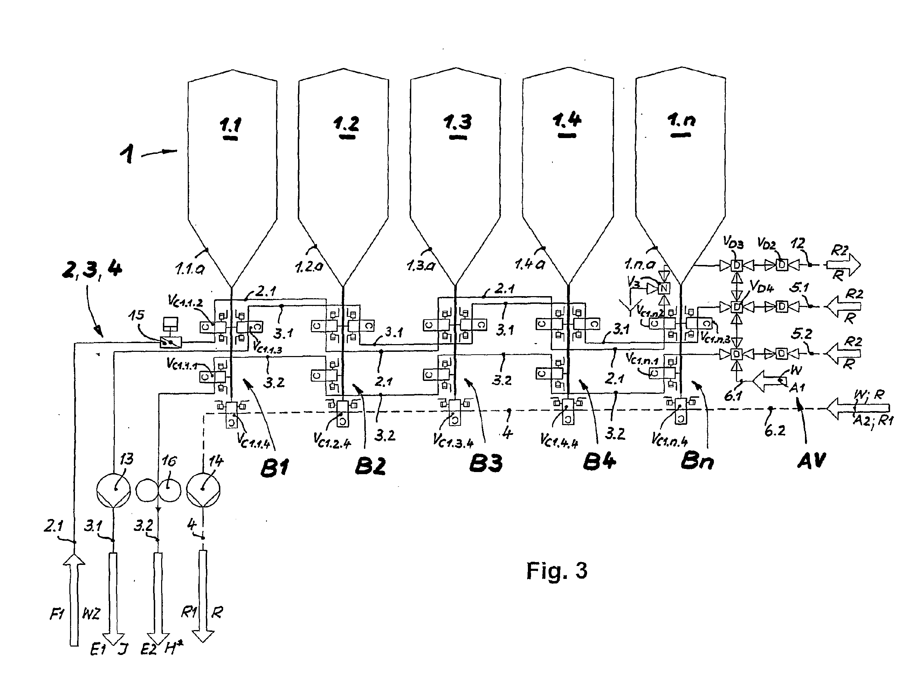

Die erfindungsgemäße Vorrichtung wird in **Figur 3** anhand von fünf Tanks, die beispielsweise als Gärtanks fungieren, weiter erläutert. Dabei ist der fünfte Tank, nach den Tanks 1.1 bis 1.4, mit 1.n gekennzeichnet. Diese allgemeine Bezeichnung soll zum Ausdruck bringen, dass sich die vorgeschlagene erfindungsgemäße Vorrichtung auch auf eine größere Anzahl von Tanks erstrecken kann. An jedem Ventilverteilerbaum B1 bis Bn sind im Ausführungsbeispiel vier vermischungssichere Doppeldichtventile V_{C} (z.B. Tank 1.1: V_{C1.1.1}, V_{C1.1.2}, V_{C1.1.3}, V_{C1.1.4}) vorgesehen, wobei das jeweils am unteren Ende des Ventilverteilerbaumes B1 bis Bn vorgesehene Doppeldichtventil V_{C1.1.4} bis V_{C1.n.4} die Rohrleitung Reinigung 4 mit jedem der Ventilverteilerbäume B1 bis Bn verbindet. Die Rohrleitung Reinigung 4 wird über eine zweite Rohrleitung Ausschub 6.2 im Zuge eines zweiten Ausschubs A2 mit Ausschubwasser W versorgt und an ihrem anderen Ende befindet sich die zweite Pumpe 14, die das aus der Tankreinigung R1 anfallende Reinigungsmittel R bzw. das aus dem Ausschub A2 resultierende Ausschubwasser W abfördert. Über die erste Rohrleitung Füllen 2.1 wird im Wege des ersten Füllens F1 beispielsweise Würze WZ den jeweils in Frage kommenden Tanks 1.1 bis 1.n zugeführt. Zu diesem Zweck ist die Rohrleitung 2.1 über jeweils ein Doppeldichtventil V_{C1.1.2} bis V_{C1.n.2} mit dem zugeordneten Ventilverteilerbaum B1 bis Bn wahlweise und schaltbar verbunden. Die Rohrleitung 2.1 endet in einer mit AV gekennzeichneten Ventilanordnung zum Ausschub der Rohrleitungen. Zu diesem Zweck wird die Rohrleitung 2.1 zunächst über ein Absperrventil mit drei Gehäuseanschlüssen V₃ und danach über Doppelsitzventile V_{D3} und V_{D2} und die sich anschließende Ablaufleitung Rohrreinigung 12 in die Umgebung des Rohrsystems fortgeführt. Ein erstes Entleeren E1 erfolgt über eine erste Rohrleitung Entleeren 3.1. Hier handelt es sich beispielsweise um Jungbier J, welches aus dem in Frage kommenden Tank 1.1 bis 1.n auf dem Weg über den zugeordneten Ventilverteilerbaum B1 bis Bn und das in Frage kommende Doppeldichtventil V_{C1.1.3} bis V_{C1.n.3} der Rohrleitung 3.1 zugeführt und über die erste Pumpe 13 in den nachgeordneten Bereich abgeführt wird. Die Leitung 3.1 endet andererseits ebenfalls in der Ventilanordnung AV zum Ausschub der Rohrleitung, wobei im vorliegenden Fall ein Doppelsitzventil V_{D4} und anschließend ein Doppelsitzventil V_{D2} (nicht bezeichnet) vorgesehen sind und letzterem über die erste Zulaufleitung Rohrreinigung 5.1 zum Zwecke der Rohrreinigung R2 Reinigungsmittel R zugeführt werden kann.

Sinngemäß in gleicher Weise gestaltet sich die zweite Entleerung E2. Hier handelt es sich beispielsweise um einen Hefeabzug H*. Hierzu ist eine zweite Rohrleitung Entleeren 3.2 mit einer dritten Pumpe 16 vorgesehen, die jeweils über ein Doppeldichtventil V_{C1.1.1} bis V_{C1.n.1} mit dem zugeordneten Ventilverteilerbaum B1 bis Bn wahlweise und schaltbar verbunden werden kann. Auch die Rohrleitung 3.2 endet andererseits in der Ventilanordnung AV; im vorliegenden Fall wird sie über Doppelsitzventile V_{D4} und V_{D2} mit der zweiten Zulaufleitung Rohrreinigung 5.2 verbunden, der im Falle der Rohrreinigung R2 Reinigungsmittel R zugeführt werden kann. Zum Ausschub A1 der Rohrleitungen 2.1, 3.1 und 3.2 ist eine erste Rohrleitung Ausschub 6.1 vorgesehen, über die Ausschubwasser W dem Rohrleitungssystem zugeführt werden kann.

Die erfindungsgemäße Vorrichtung, wie sie sich in den **Figuren 2** und **3** darstellt, ergibt einen nicht unbeträchtlichen Raumgewinn gegenüber Vorrichtungen nach dem Stand der Technik. In Brauereien werden beispielsweise zylindrokonische Tanks 1.1 bis 1.n eingesetzt, die üblicherweise mit ihrem Tankboden 1.1a bis 1.na durch eine Decke ragen oder auf einem Gerüst montiert sind, so dass die vorgeschlagene erfindungsgemäße Vorrichtung problemlos unter dem Tankauslauf angeordnet werden kann. Über die am unteren Ende der Ventilverteilerbäume B1 bis Bn verlaufende Rohrleitung Reinigung 4, die als Tankauslaufleitung fungiert, kann der jeweilige Tank 1.1 bis 1.n einschließlich des zugeordneten Verteilerbaumes B1 bis Bn restlos entleert werden. Bei befülltern Tank 1.1 bis 1.n stellt der Ventilverteilerbaum B1 bis Bn praktisch eine Tankbodenverlängerung dar, in der zum einen ein Stoffaustausch durch Konvektion stattfinden kann und in der sich zum anderen darüber hinaus auch keine Erwärmung infolge Reinigung der seitlich am Ventilverteilerbaum B1 bis Bn angeordneten Funktionsleitungen 2.1 bis 3.3 einstellt. Dadurch wird beispielsweise im Tank 1.1 bis 1.n das keimvermehrende Umfeld vermieden. Außerdem befindet sich bei einem Gärtank gerade im unteren Bereich des Tankbodens 1.1a bis 1.na (Tankkonus) der Ort der größten Hefeansammlung mit deren keimunterdrückenden Wirkung.

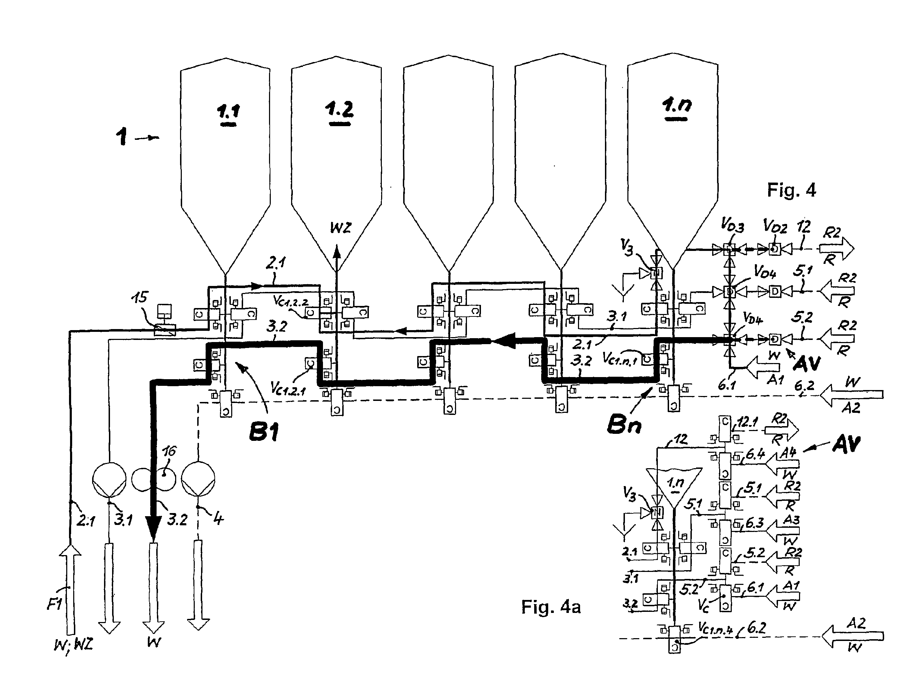

**Figur 4** verdeutlicht beispielhaft das sogenannte Ausschub-Management. Soll beispielsweise die zweite Rohrleitung Entleeren 3.2, über die zuvor der Hefeabzug H* aus einem der Tanks 1.1 bis 1.n erfolgte, ausgeschoben werden, dann wird über die Rohrleitung Ausschub 6.1 Ausschubwasser W auf dem Weg über das Doppelsitzventil V_{D4} zugeführt. Das Ausschubwasser W verdrängt nun die in der Leitung 3.2 befindliche Hefe H* restlos auf dem Weg über die dritte Pumpe 16 bis zu ihrem Bestimmungsort. Man erkennt, dass keine "toten Leitungsenden" vorliegen und dass die Produktverluste demzufolge, soweit dies überhaupt möglich ist, minimiert sind.

Soll beispielsweise der Tank 1.2 über die erste Rohrleitung Füllen 2.1 im Zuge des Füllens F1 mit Würze WZ befüllt werden, so wird zu diesem Zweck das Doppeldichtventil V_{C1.2.2} geöffnet. Die Würze WZ strömt dem Tank 1.2 zu, wobei die dem Doppeldichtventil V_{C1.2.2} in Strömungsrichtung nachgelagerte Rohrleitung 2.1 ebenfalls mit Würze WZ befüllt wird. Dieser Leitungsabschnitt kann im Anschluss an die Befüllung des Tanks 1.2 über einen sogenannten "Gegenausschub" A1, der seinen Ausgang in der Ventilanordnung AV durch Zufuhr von Ausschubwasser W über die erste Rohrleitung Ausschub 6.1 nimmt, durchgeführt werden. Die in der Rohrleitung 2.1 befindliche Würze WZ wird nach Schließen der Absperrklappe 15 nahezu verlustlos über das Doppeldichtventil V_{C1.2.2} in den Tank 1.2 ausgeschoben.

**Figur 4a** zeigt die Ventilanordnung AV zum Ausschub der Rohrleitungen, wenn die im Bereich der Ventilverteilerbäume B1 bis Bn verwendeten Doppeldichtventile V_{C} auch dort Verwendung finden. Man erkennt, dass jede der Rohrleitungen 2.1, 3.1 und 3.2 auf dem Weg über ein zugeordnetes Doppeldichtventil V_{C} einerseits in einem Endabschnitt der Ablaufleitung Tankreinigung 12.1 bzw. der ersten bzw. der zweiten Zulaufleitung Rohrreinigung 5.1, 5.2 für die Rohrreinigung R2 zur Abfuhr bzw. Zufuhr des Reinigungsmittels R endet und andererseits zum Zwecke des Ausschubs A4, A3, A1 mit Ausschubwasser W an eine vierte bzw. dritte bzw. erste Rohrleitung Ausschub 6.4, 6.3 bzw. 6.1 angeschlossen ist.

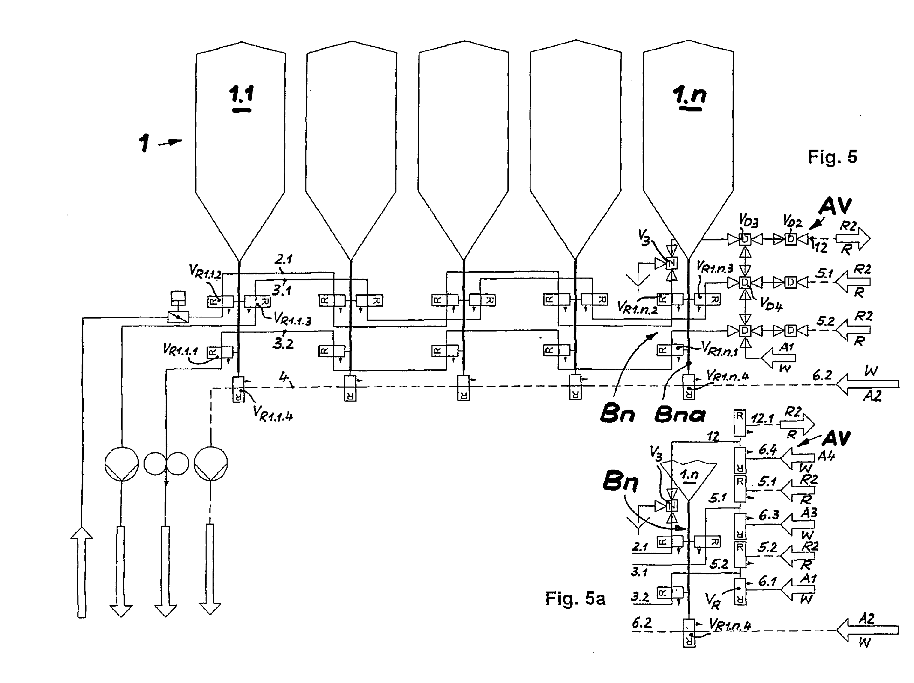

**Figur 5** verdeutlicht die erfindungsgemäße Vorrichtung, wenn anstelle der in **Figur 4** verwendeten Doppeldichtventile V_{C} sogenannte Doppelsitzventile erster Art V_{R} oder zweiter Art V_{R*} Anwendung finden. Die Darstellung nimmt hinsichtlich der gewählten Bezeichnungen lediglich Bezug auf das Doppelsitzventil erster Art V_{R}. Weder die Unterschiede zwischen den beiden Ausführungsformen V_{R} und V_{R*} noch die Unterschiede zwischen letzteren einerseits und dem Doppeldichtventil V_{C} andererseits haben auf den grundsätzliche Aufbau der erfindungsgemäßen Vorrichtung Einfluss. Unterschiede bestehen allenfalls im erhöhten Grad an Sicherheit, den diese Art von vermischungssicherem Ventil V_{R}, V_{R*} gegenüber einem Doppeldichtventil V_{C} bietet. Darüber hinaus ist der Leckagehohlraum bei derartige Doppelsitzventile V_{R}, V_{R*} nicht nur in der Schließ-, sondern auch in der Offenstellung des Ventils reinigbar.

**Figur 5a** zeigt, dass auch die Ventilanordnung AV zum Ausschub der Rohrleitungen durchgängig mit den vorstehend beschriebenen Doppelsitzventilen erster Art V_{R}, deren Prototyp beispielsweise aus der **US-PS 4,436,106** bekannt ist, oder jener zweiter Art V_{R*}, deren Prototyp in der **DE-C- 37 01 027** beschrieben ist, ausgestaltet werden kann.

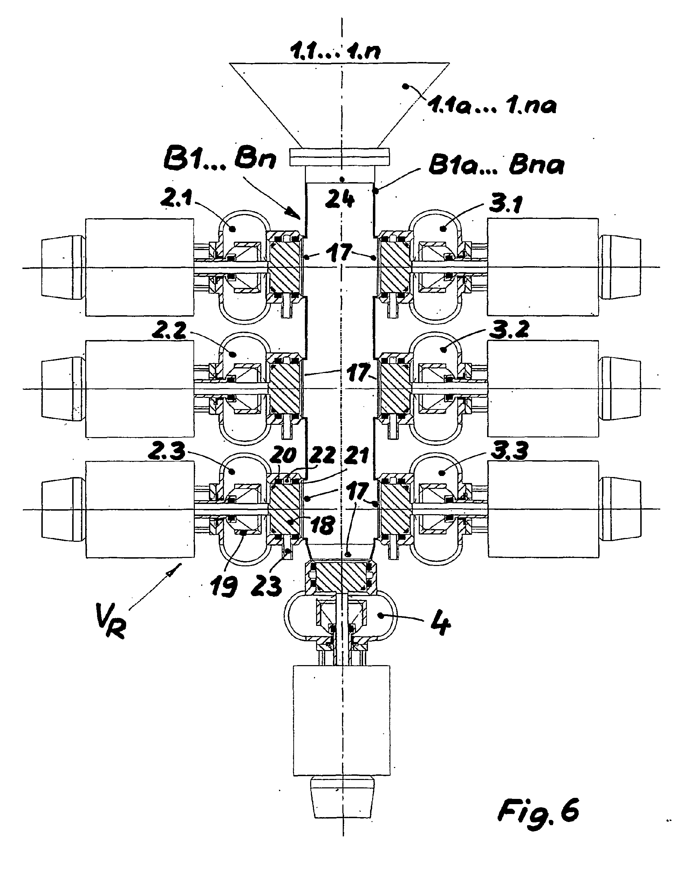

Eine konkrete Ausgestaltung eines Verteilerbaumes B1 bis Bn mit Doppelsitzventilen zweiter Art V_{R*} (**DE-C-37 01 027**) zeigt **Figur 6**. Der langgestreckte Hohlkörper B1a bis Bna ist an einen Tankauslauf 24 des Tankbodens 1.1a bis 1.na angeschlossen und erstreckt sich senkrecht nach unten. Der Hohlkörper B1a bis Bna verzweigt sich über Anschlüsse 17 in die Rohrleitungen 2.1 bis 2.3, 3.1 bis 3.3 und am unteren Ende in die Rohrleitung 4. An jedem der Anschlüsse 17 ist ein Doppelsitzventil zweiter Art V_{R*} angeordnet, das über ein schieberartiges Schließglied 18 und ein schieberartiges Verschlussteil mit Innendurchgang 19 verfügt. Ventilgehäuseseitig sind, im Abstand voneinander, eine erste und eine zweite Abdichtungsstelle 20 bzw. 21 vorgesehen, die in der Schließstellung des Doppelsitzventils, die jeweils dargestellt ist, mit dem Schließglied 18 und die in der Offenstellung mit dem Verschlussteil mit Innendurchgang 19 zusammenwirken. Ein ventilgehäuseseitig zwischen den Abdichtungsstellen 20, 21 ausgebildeter Leckagehohlraum 22 ist über eine Leckageablaufleitung 23 zur Abfuhr ggf. anfallender Leckagen mit der Umgebung des Ventils verbunden. Man erkennt, dass es aufgrund der Ausgestaltung des Doppelsitzventils V_{R}* ohne weiteres möglich ist, in der Schließstellung des Ventils einen nahezu bündigen Abschluss des Innenraumes des Hohlkörpers B1a bis Bna durch die letzterem zugewandte Stirnfläche des Schließgliedes 18 im Sinne der Erfindung sicherzustellen.

### BEZUGSZEICHENLISTE DER VERWENDETEN ABKÜRZUNGEN

**Figur 1** (Stand der Technik)

| | |
|---|---|
| 1 | Tanklagersystem |
| 1.1 bis 1.n | Tank |
| 1.i | einer der Tanks 1.1 bis 1.n |
| 2.1 | erste Rohrleitung Füllen |
| 2.2 | zweite Rohrleitung Füllen |
| 3 | Rohrleitung Entleeren |
| 4 | Rohrleitung Reinigung |
| 5.1 | erste Zulaufleitung Rohrreinigung |
| 5.2 | zweite Zulaufleitung Rohrreinigung |
| 6 | Rohrleitung Ausschub |
| 7.1.1.1 bis 7.1.1.1 | erstes Ventil |
| 7.2.1.1 bis 7.2.1.n | zweites Ventil |
| 8.1.1 bis 8.1.n | Auslaufleitung |
| 8.1.1* bis 8.1.n* | Tankauslaufleitung |
| 8.1.1** bis 8.1.n** | Abschnitt der Auslaufleitung |
| 9.1.1 bis 9.1.n+1 | Traverse |
| 10.1 | erste Leitung |
| 10.2 | zweite Leitung |
| 10.3 | dritte Leitung |
| 10.4 | vierte Leitung |
| 11.1.1 bis 11.1.n | Zulaufleitung Tankreinigung |
| 12 | Ablaufleitung Rohrreinigung |
| 13 | erste Pumpe |
| 14 | zweite Pumpe |
| 15 | Absperrklappe |
| a | Traversenabstand |
| A1 | Ausschub |
| E1, E2 | Entleeren 1 (Jungbier J), Entleeren 2 (Hefeabzug H*) |
| F1, F2 | Füllen 1 (Würze WZ), Füllen 2 (Hefe H) |
| H | Hefe |
| H* | Hefeabzug |
| J | Jungbier |
| P | Produkt, allgemein |
| R | Reinigungsmittel |
| R1 | Tankreinigung/Rohrreinigung |
| R2 | Rohrreinigung |
| VB | Ventilblock |
| V₁₁ bis V₅₆ | Ventile in Ventilmatrix des Ventilblockes |
| V₄₀ | der Ventilmatrix vorgeordnetes erstes Ventil |
| V₄₀₁ | der Ventilmatrix vorgeordnetes zweites Ventil |
| W | Ausschubwasser |
| WZ | Würze |

**Figuren 2 bis 6** (Bezeichnungen zusätzlich zu jenen in Figur 1)

| | |
|---|---|
| 1.1a bis 1.na | Tankboden |
| 1.i.a | einer der Tankböden 1.1 a bis 1.na |
| 2.1, 2.2, ..., 2.n | erste Gruppe Rohrleitungen (Füllen F; Entleeren E) |
| 2.i | eine der Rohrleitungen aus der ersten Gruppe |
| 3.1, 3.2, ..., 3.n | zweite Gruppe Rohrleitungen (Füllen F; Entleeren E) |
| 3.i | eine der Rohrleitungen aus der zweiten Gruppe |
| 3.1 | erste Rohrleitung Entleeren |
| 3.2 | zweite Rohrleitung Entleeren |
| 6.1 | erste Rohrleitung Ausschub |
| 6.2 | zweite Rohrleitung Ausschub |
| 6.3 | dritte Rohrleitung Ausschub |
| 6.4 | vierte Rohrleitung Ausschub |
| 12.1 | Endabschnitt der Ablaufleitung Tankreinigung |
| 16 | dritte Pumpe |
| 17 | Anschlussöffnung |
| 18 | Schließglied |
| 19 | Verschlussteil mit Innendurchgang |
| 20 | erste Abdichtungsstelle |
| 21 | zweite Abdichtungsstelle |
| 22 | Leckagehohlraum |
| 23 | Leckageablaufleitung |
| 24 | Tankauslauf |
| A1 bis A4 | Ausschub |
| AV | Ventilanordnung zum Ausschub der Rohrleitungen |
| B1 bis Bn | Ventilverteilerbaum |
| Bi | einer der Verteilerbäume B1 bis Bn |
| B1a bis Bna | Hohlkörper |
| Bia | Tank 1.i zugeordneter Hohlkörper B1a bis Bna |
| E | Entleeren, allgemein |
| F | Füllen, allgemein |
| V_{C} | Doppeldichtventil |
| V_{C1.1.1} bis V_{C1.n.1} | Doppeldichtventil in Rohrleitung 3.2 |
| V_{C1.1.2} bis V_{C1.n.2} | Doppeldichtventil in Rohrleitung 2.1 |
| V_{C1.1.3} bis V_{C1.n.3} | Doppeldichtventil in Rohrleitung 3.1 |
| V_{C1.1.4} bis V_{C1.n.4} | Doppeldichtventil in Rohrleitung 4 |
| V_{R} | Doppelsitzventil erster Art |
| V_{R*} | Doppelsitzventil zweiter Art |
| V_{S} | Scheibenventil |
| V_{D2} | Doppelsitzventil mit zwei Gehäuseanschlüssen |
| V₃ | Absperrventil mit drei Gehäuseanschlüssen |
| V_{D3} | Doppelsitzventil mit drei Gehäuseanschlüssen |
| V_{D4} | Doppelsitzventil mit vier Gehäuseanschlüssen |

## Patentansprüche

1. Verfahren zum Betrieb von Tanklagersystemen (1) im festverrohrten Verbund mit Rohrsystemen für Flüssigkeiten,
• bei dem Flüssigkeiten (P, H, J, WZ; R, W) aus dem Rohrsystem einem Tank (1.i) des aus mehr als einem Tank bestehenden Tanklagersystems (1) zugeführt werden (R1, R2),
• bei dem Flüssigkeiten aus dem Tank (1.i) in das Rohrsystem abgeführt werden (R1, R2),
• bei dem die Zufuhr der Flüssigkeiten in den und die Abfuhr der Flüssigkeiten aus dem jeweiligen Tank (1.i) von unten erfolgt,
• bei dem die zu- oder abzuführenden Flüssigkeiten einen mit dem jeweiligen Tankinhalt in unmittelbarer Verbindung stehenden Raum (Bia) unterhalb des jeweiligen Tanks (1.i) durchströmen und
• bei dem die jeweilige Flüssigkeit in diesem Raum (Bia) in unmittelbarer Nähe zu dessen innerer Begrenzung von den an diesen Raum herangeführten Rohrleitungen des Rohrsystems wahlweise, schaltbar und vermischungssicher abtrennbar ist.

2. Vorrichtung zum Durchführen des Verfahrens nach Anspruch 1,
• mit einem aus mehr als einem Tank (1.1, 1.2, ..., 1.i, ..., 1.n) bestehenden Tanklagersystem (1),
• mit einem aus wenigstens einer Rohrleitung (2.1, 2.2, ..., 2.i, ..., 2.n; 3.1, 3.2, ..., 3.1, ..., 3.n; 4) bestehenden Rohrsystem (2, 3, 4),
• mit jeweils einem in einem Tankboden (1.1a, 1.2a, ..., 1.ia, ..., 1.na) des jeweiligen Tanks (1.1, 1.2, ..., 1.i, ..., 1.n) ausmündenden Ventilverteilerbaum (B1, B2, ..., Bi, ..., Bn),
• der als langgestreckter Hohlkörper (B1a, B2a, ..., Bia, ..., Bna) ausgebildet, der im wesentlichen senkrecht orientiert ist und
• der Anschlussöffnungen (17) zum Verbinden seines Innenraumes mit jeder der Rohrleitungen (2.1, 2.2, ..., 2.i, ..., 2.n; 3.1, 3.2, ..., 3.1, ..., 3.n; 4) besitzt,
• wobei eine erste Gruppe Rohrleitungen (2.1, 2.2, ..., 2.i, ..., 2.n) und eine zweite Gruppe Rohrleitungen (3.1, 3.2, ..., 3.i, ..., 3.n) in jeweils reihenförmiger Anordnung untereinander, auf einander gegenüberliegenden Seiten des Hohlkörpers (B1a, B2a, ..., Bia, ..., Bna), in zwei zueinander und zur Längsachse des Hohlkörpers parallelen Ebenen paarweise angeordnet (2.1, 3.1; 2.2, 3.2; ..., 2.i, 3.i, ..., 2.n, 3.n) und an diesem vorbeigeführt sind,
• und mit jeweils einem in seinem Sitzbereich vermischungssicher ausgestalteten Ventil (V_{C}; V_{R}; V_{R*}; V_{S}), das in jeder Verbindung zwischen der Rohrleitung (2.1, 2.2, ..., 2.i, ..., 2.n; 3.1, 3.2, ..., 3.1, ..., 3.n; 4) und der zugeordneten Anschlussöffnung (17) angeordnet ist und diese Verbindung in unmittelbarer Nähe zum Hohlkörper (B1a, B2a, ..., Bia, ..., Bna) schaltet.

3. Vorrichtung zum Durchführen des Verfahrens nach Anspruch 1,
• mit einem aus mehr als einem Tank (1.1, 1.2, ..., 1.i, ..., 1.n) bestehenden Tanklagersystem (1),
• mit einem aus wenigstens einer Rohrleitung (2.1, 2.2, ..., 2.i, ..., 2.n; 3.1, 3.2, ..., 3.1, ..., 3.n; 4) bestehenden Rohrsystem (2, 3, 4),
• mit jeweils einem in einem Tankboden (1.1 a, 1.2a, ..., 1.ia, ..., 1.na) des jeweiligen Tanks (1.1, 1.2, ..., 1.i, ..., 1.n) ausmündenden Ventilverteilerbaum (B1, B2, ..., Bi, ..., Bn),
• der als langgestreckter Hohlkörper (B1a, B2a, ..., Bia, ..., Bna) ausgebildet, der im wesentlichen senkrecht orientiert ist und
• der Anschlussöffnungen (17) zum Verbinden seines Innenraumes mit jeder der Rohrleitungen (2.1, 2.2, ..., 2.i, ..., 2.n; 3.1, 3.2, ..., 3.1, ..., 3.n; 4) besitzt,
• wobei eine erste Gruppe Rohrleitungen (2.1, 2.2, ..., 2.i, ..., 2.n) und eine zweite Gruppe Rohrleitungen (3.1, 3.2, ..., 3.i, ..., 3.n) jeweils untereinander, auf einander gegenüberliegenden Seiten des Hohlkörpers (B1a, B2a, ..., Bia, ..., Bna), in zueinander und zur Längsachse des Hohlkörpers (B1a, B2a, ..., Bia, ..., Bna) parallelen Ebenen paarweise angeordnet (2.1, 3.1; 2.2, 3.2; ..., 2.i, 3.i, ..., 2.n, 3.n) und einander in einem Winkel von 90 Grad kreuzend an dem Hohlkörper (B1a, B2a, ..., Bia, ..., Bna) vorbeigeführt sind,
• und mit jeweils einem in seinem Sitzbereich vermischungssicher ausgestalteten Ventil (V_{C}; V_{R}; V_{R*}; V_{S}), das in jeder Verbindung zwischen der Rohrleitung (2.1, 2.2, ..., 2.i, ..., 2.n; 3.1, 3.2, ..., 3.1, ..., 3.n; 4) und der zugeordneten Anschlussöffnung (17) angeordnet ist und diese Verbindung in unmittelbarer Nähe zum Hohlkörper (B1a, B2a, ..., Bia, ..., Bna) schaltet.

4. Vorrichtung nach Anspruch 2 oder 3, **dadurch gekennzeichnet, dass** der Hohlkörper (B1 a, B2a, ..., Bia, ..., Bna) an der tiefsten Stelle des jeweiligen Tankbodens (1.1 a, 1.2a, ..., 1.ia, ... 1.na) angeordnet ist.

5. Vorrichtung nach Anspruch 4, **dadurch gekennzeichnet, dass** die Längsachse des Hohlkörpers (B1a, B2a, ..., Bia, ..., Bna) koaxial zur Längsachse des Tanks (1.1, 1.2, ..., 1.i, ..., 1.n) angeordnet ist.

6. Vorrichtung nach einem der Ansprüche 2 bis 5, **dadurch gekennzeichnet, dass** der Hohlkörper (B1a, B2a, ..., Bia, ..., Bna) als zylindrisches Rohr ausgebildet ist.

7. Vorrichtung nach einem der Ansprüche 2 bis 6, **dadurch gekennzeichnet, dass** das dem Tankboden (1.1a, 1.2a, ...1.ia, ..., 1.na) abgewandte unterste Ende des Hohlkörpers (B1a, B2a, ..., Bia, ..., Bna) mit einer Rohrleitung Reinigung (4) verbunden ist.

8. Vorrichtung nach einem der Ansprüche 2 bis 7, **dadurch gekennzeichnet, dass** die Rohrleitungen (2.1, 2.2, ..., 2.i, ..., 2.n; 3.1, 3.2, ..., 3.1, ..., 3.n; 4) jeweils als durchgehende, allen Tanks (1.1, 1.2, ..., 1.i, ..., 1.n) eines Tanklagersystems (1) in gleicher Funktion zugeordnete Rohrleitungen (Füllen F; Entleeren E; Tank-/Rohrreinigung R1, R2) ausgeführt sind.

9. Vorrichtung nach Anspruch 8, **dadurch gekennzeichnet, dass** die Tanks (1.1, 1.2, ..., 1.i, ..., 1.n) eines Tanklagersystems (1) eine reihen- oder matrixförmige Anordnung aufweisen.

10. Vorrichtung nach einem der Ansprüche 2 bis 9, **dadurch gekennzeichnet, dass** das jeweilige Ventil (V_{R}) als Doppelsitzventil mit zwei relativ zueinander bewegbaren Schließgliedern ausgebildet ist, die zwischen sich einen Leckagehohlraum begrenzen, der über wenigstens einen Verbindungsweg mit der Umgebung des Doppelsitzventils verbunden ist.

11. Vorrichtung nach einem der Ansprüche 2 bis 9, **dadurch gekennzeichnet, dass** das jeweilige Ventil (V_{R*}) als Doppelsitzventil mit einem schieberartigen Schließglied und einem schieberartigen Verschlussteil mit lnnendurchgang ausgebildet ist, die relativ zueinander beweglich ausgebildet sind, dass Schließglied und Verschlussteil jeweils in Verbindung mit dem Ventilgehäuse zwei Abdichtungsstellen bilden, die seriell und in zueinander parallelen Ebenen angeordnet sind, mit einem Leckagehohlraum, der ventilgehäuseseitig angeordnet, einerseits mit der Umgebung des Ventils verbunden ist und der andererseits zwischen den Abdichtungsstellen in einen Innenraum des Ventils ausmündet, dass in der Schließstellung des Ventils der Leckagehohlraum gegenüber dem Innenraum des Ventils durch das mit den zwei Abdichtungsstellen zusammenwirkende Schließglied verschlossen ist und dass der Mediumeintritt vom Innenraum zum Leckagehohlraum in anderen Stellungen als in der Schließstellung des Ventils wirkungsmäßig in gleicher Weise wie in der Schließstellung durch das das Schließglied hinsichtlich seiner Wechselwirkung mit dem Leckagehohlraum substituierende Verschlussteil mit Innendurchgang gesteuert wird.

12. Vorrichtung nach einem der Ansprüche 2 bis 9, **dadurch gekennzeichnet, dass** das jeweilige Ventil (V_{c}) als Doppeldichtventil mit zwei auf einem Schließglied in Hubrichtung beabstandeten Sitzdichtungen ausgebildet ist, zwischen denen ein ringförmig umlaufender Leckagehohlraum angeordnet ist, der über wenigstens einen Verbindungsweg mit der Umgebung des Doppeldichtventils verbunden ist.

13. Vorrichtung nach einem der Ansprüche 10 bis 12, **dadurch gekennzeichnet, dass** die Ventile (V_{R}, V_{R*}; V_{C}) jeweils durch Teilhubbewegungen ihrer Schließglieder (bei V_{R}, V_{R*}) bzw. ihres Schließgliedes (bei V_{C}) einer Sitzreinigung unterworfen werden.

14. Vorrichtung nach einem der Ansprüche 2 bis 9, **dadurch gekennzeichnet, dass** das Ventil (V_{S}) als Scheibenventil mit zwei am dichtenden Umfang des scheibenförmigen Schließgliedes beabstandeten Dichtungen ausgebildet ist, zwischen denen ein ringförmig umlaufender Leckagehohlraum angeordnet ist, der über wenigstens einen .Verbindungsweg mit der Umgebung des Scheibenventils verbunden ist.

15. Vorrichtung nach einem der Ansprüche 2 bis 14, **dadurch gekennzeichnet, dass** an jedem tanknahen Ende der Rohrleitung (2.1, 2.2, ..., 2.i, ..., 2.n; 3.1, 3.2, ..., 3.1, ..., 3.n; 4) eine Ventilanordnung AV zum Ausschub der Rohrleitungen vorgesehen ist.

## Claims

1. A method for operating tank farm systems (1) which are interconnected with pipe systems for liquids in a fixed manner,
• wherein liquids (P, H, J, WZ; R, W) are supplied (R1, R2) from the pipe system to a tank (1.i) of the tank farm system (1) comprising more than one tank,
• wherein liquids are discharged (R1, R2) from the tank (1.i) into the pipe system,
• wherein the supply and discharge of liquids into and out of the respective tank (1.i) ensues from underneath,
• wherein the liquids to be supplied or discharged flow through a space (Bia) which is directly connected to the respective tank contents underneath the respective tank (1.i), and
• wherein the respective liquid in said space (Bia) can be separated selectively, switchably and in a mix-proof manner from the pipe lines of said pipe system leading to said space in the direct vicinity of the inner delimitation of the space.

2. A device for realizing the method according to claim 1,
• having a tank farm system (1) comprised of more than one tank (1.1, 1.2, ..., 1.i, ... 1.n),
• having a pipe system (2, 3, 4) comprising at least one pipe line (2.1, 2.2, ... 2.i, ... 2.n; 3.1, 3.2, ..., 3.1, ... 3.n; 4),
• having a valve distribution tree (B1, B2,..., Bi,..., Bn) which discharges into a tank bottom (1.1a, 1.2a,..., 1.ia, ..., 1.na) of the respective tank (1.1,1.2, ..., 1.i, ..., 1.n),
• which is configured as an elongated hollow body (B1a, B2a...., Bia,..., Bna) oriented to be substantially perpendicular, and
• which has connection openings (17) for connecting its interior space to each of the pipe lines (2.1, 2.2, ..., 2.i, ..., 2.n; 3.1, 3.2, ..., 3.1, ..., 3.n; 4),
• whereby a first group of pipe lines (2.1, 2.2, ..., 2.i, ..., 2.n) and a second group of pipe lines (3.1, 3.2, ... 3.i, ..., 3.n) are respectively disposed in paired rows to one another on opposite sides of the hollow body (B1a, B2a, ..., Bia, ... Bna) in two planes parallel to one another and to the longitudinal axis of the hollow body (2.1, 3.1; 2.2, 3.2; ..., 2.i, 3.i, ..., 2.n, 3.n) and running past same,
• and having a valve (V_{c}; V_{R}; V_{R*}, Vₛ) designed to be mix-proof provided in the seat area and disposed in each connection between the pipe line (2.1, 2.2, ..., 2.i, ..., 2.n; 3.1, 3.2, ..., 3.1, ..., 3.n; 4) and the associated connection opening (17) and controls said connection in the direct proximity of the hollow body (B1a, B2a...., Bia,..., Bna).

3. The device for realizing the method according to claim 1,
• having a tank farm system (1) comprised of more than one tank (1.1, 1.2, ..., 1.i, ... 1.n),
• having a pipe system (2, 3, 4) comprising at least one pipe line (2.1, 2.2, ... 2.i, ... 2.n; 3.1, 3.2, ..., 3.1, ... 3.n; 4),
• having a valve distribution tree (B1, B2,..., Bi,..., Bn) which discharges into a tank bottom (1.1 a, 1.2a,..., 1.ia, ..., 1.na) of the respective tank (1.1,1.2, ..., 1.i, ..., 1.n),
• which is configured as an elongated hollow body (B1a, B2a...., Bia,..., Bna) oriented to be substantially perpendicular, and
• which has connection openings (17) for connecting its interior space to each of the pipe lines (2.1, 2.2, ..., 2.i, ..., 2.n; 3.1, 3.2, ..., 3.1, ..., 3.n; 4),
• whereby a first group of pipe lines (2.1, 2.2, ..., 2.i, ..., 2.n) and a second group of pipe lines (3.1, 3.2, ... 3.i, ..., 3.n) are respectively disposed in pairs to one another (2.1, 3.1; 2.2, 3.2; ..., 2.i, 3.i, ..., 2.n, 3.n) on opposite sides of the hollow body (B1a, B2a, ..., Bia, ..., Bna) in planes parallel to one another and to the longitudinal axis of the hollow body (B1a, B2a, ..., Bia, ..., Bna) and run past each other at an angle of 90 degrees intersecting at the hollow body (B1a, B2a...., Bia,..., Bna),
• and having a valve (V_{c}; V_{R}; V_{R*}, Vₛ) designed to be mix-proof provided in the seat area and disposed in each connection between the pipe line (2.1, 2.2, ..., 2.i, ..., 2.n; 3.1, 3.2, ..., 3.1, ..., 3.n; 4) and the associated connection opening (17) and controls said connection in the direct proximity of the hollow body (B1a, B2a...., Bia,..., Bna).

4. The device according to claim 2 or 3, **characterized in that** the hollow body (B1a, B2a...., Bia,..., Bna) is disposed at the lowest point of the respective tank bottom (1.1a, 1.2a, ..., 1.ia, ... 1.na).

5. The device according to claim 4, **characterized in that** the longitudinal axis of the hollow body (B1a, B2a...., Bia,..., Bna) is disposed coaxially to the longitudinal axis of the tank (1.1, 1.2, ..., 1.i, ... 1.n).

6. The device according to at least one of claims 2 to 5, **characterized in that** the hollow body (B1a, B2a...., Bia,..., Bna) is configured as a cylindrical tube.

7. The device according to at least one of claims 2 to 6, **characterized in that** the lowermost end of the hollow body (B1a, B2a...., Bia,..., Bna) facing away from the tank bottom (1.1 a, 1.2a, ..., 1.ia, ... 1.na) is connected to a pipe line cleaning device (4).

8. The device according to at least one of claims 2 to 7, **characterized in that** each of the pipe lines (2.1, 2.2, ..., 2.i, ..., 2.n; 3.1, 3.2, ..., 3.1, ..., 3.n; 4) are configured as through pipe lines associated with all tanks (1.1, 1.2, ..., 1.i, ..., 1.n) of a tank farm system (1) having the same function (filling F; emptying E; tank/pipe cleaning R1, R2).

9. The device according to claim 8, **characterized in that** the tanks (1.1, 1.2, ..., 1.i, ... 1.n) of a tank farm system (1) exhibit a row-shaped or matrix-shaped arrangement.

10. The device according to at least one of claims 2 to 9, **characterized in that** the respective valve (V_{R}) is configured as a double-seat valve with two closing members movable with respect to one another which define a leakage cavity therebetween connected to the area surrounding the double-seat valve by at least one connecting path.

11. The device according to at least one of claims 2 to 9, **characterized in that** the respective valve (V_{R*}) is configured as a double-seat valve with a slidable closing member and a slidable closure element having an inner passage which are formed to be movable with respect to one another, that said closing member and said closure element in conjunction with the valve housing each form two sealing points which are disposed serially and in planes parallel to one another having a leakage cavity disposed on the valve housing side connected to the area surrounding the valve on the one hand, and discharging into an interior space of the valve between the sealing points on the other, that when the valve is in its closed position the leakage cavity is closed with respect to the interior of the valve by the closing member interacting with the two sealing points, and that the entry of media into the leakage cavity from the interior space is controlled in positions other than the closed position of the valve in the same way as in the closed position by the closure element having an inside passage acting as a substitute for the closing member in terms of its interaction with the leakage cavity.

12. The device according to at least one of claims 2 to 9, **characterized in that** the respective valve (V_{C}) is configured as a double-sealing valve with two seat sealings spaced apart on a closing member in the direction of lift, between which an annular circumferential leakage cavity is disposed which is connected to the area surrounding the double-sealing valve by at least one connecting path.

13. The device according to at least one of claims 10 to 12, **characterized in that**
said valves (V_{R}; V_{R*}, V_{C}) are each subjected to a seat cleaning procedure by partial lifting motions of their closing members (in the case of V_{R}, V_{R*}) or their closing member (in the case of V_{c}).

14. The device according to at least one of claims 2 to 9, **characterized in that** said valve (V_{S}) is configured as a disk valve with two seals spaced apart at the sealing circumference of the disk-shaped closing member, between which an annular circumferential leakage cavity is disposed which is connected to the area surrounding the butterfly valve by at least one connecting path.

15. The device according to at least one of claims 2 to 14, **characterized in that**
a valve assembly AV is provided at each end of the pipe line (2.1, 2.2,.., 2.i, ..., 2.n; 3.1, 3.2, ..., 3.1, ..., 3.n: 4) near the tank for pipe line expulsion.

## Revendications

1. Procédé pour actionner des systèmes de réservoirs de stockage (1) dans un système combiné tube fixe comportant des systèmes tubulaires pour liquides,
dans lequel des liquides (P, H, J, WZ ; R, W) provenant du système tubulaire sont amenés (R1, R2) à un réservoir (1.i) du système de réservoirs de stockage (1) comprenant plus d'un réservoir,
dans lequel des liquides provenant du réservoir (1.i) sont transportés (R1, R2) dans le système tubulaire,
dans lequel l'amenée des liquides dans le réservoir et le transport des liquides hors du réservoir respectif (1.i) ont lieu par le bas,
dans lequel les liquides devant être amenés ou transportés parcourent un espace (Bia) relié directement au contenu de réservoir respectif en dessous du réservoir respectif (1.i), et
dans lequel le liquide respectif de cet espace (Bia) à proximité directe de la limite interne de celui-ci est séparable au choix de façon commutable et en étant protégé contre le mélange par les canalisations, menant à cet espace, du système tubulaire.

2. Dispositif pour réaliser le procédé selon la revendication 1,
avec un système de réservoirs de stockage (1) comprenant plus d'un réservoir (1.1, 1.2, ..., 1.i, ..., 1.n),
avec un système tubulaire (2, 3, 4) comprenant au moins une canalisation (2.1, 2.2,..., 2.i, ...2.n; 3.1, 3.2,..., 3.1, ..., 3.n; 4),
avec respectivement un arbre de distribution de soupapes (B1, B2, ..., Bi, ...Bn) débouchant dans un fond de réservoir (1.1 a, 1.2a, ...1.ia, ...1.na) du réservoir respectif (1.1, 1.2, ...1.i, ...1.n),
qui est configuré comme un corps creux allongé (B 1 a, B2a, ..., Bia, ... Bna) qui est orienté essentiellement perpendiculairement et
qui possède des orifices de raccordement (17) pour relier son espace interne à chacune des canalisations (2.1, 2.2, ..., 2.i, ...2.n; 3.1, 3.2, ..., 3.1, ..., 3.n; 4),
moyennant quoi un premier groupe de canalisations (2.1, 2.2, ..., 2.i, ...2.n) et un second groupe de canalisations (3.1, 3.2, ..., 3.1, ..., 3.n) dans une disposition respectivement sérielle, sur des côtés opposés du corps creux (B1a, B2a, ..., Bia, ...Bna), sont disposés par paires (2.1, 3.1 ; 2.2, 3.2 ; ..., 2.i, 3.i, ..., 2.n, 3.n) dans deux plans parallèles l'un à l'autre et parallèles à l'axe longitudinal du corps creux, et passant par celui-ci,
et avec respectivement une soupape (V_{C} ; V_{R} ; V_{R*} ; V_{S}) conçue avec une protection anti-mélange dans la zone de son siège, qui est disposée dans chaque raccord entre la canalisation (2.1, 2.2, ..., 2.i, ...2.n; 3.1, 3.2, ..., 3.1, ..., 3.n; 4) et l'orifice de raccordement (17) associé, et commute ce raccord à proximité immédiate du corps creux (B1a, B2a, ..., Bia, ...Bna).

3. Dispositif pour réaliser le procédé selon la revendication 1,
avec un système de réservoirs de stockage (1) comprenant plus d'un réservoir (1.1, 1.2, ..., 1.i, ..., 1.n),
avec un système tubulaire (2, 3, 4) comprenant au moins une canalisation (2.1, 2.2,..., 2.i, ...2.n; 3.1, 3.2, ...,3.1, ..., 3.n; 4),
avec respectivement un arbre de distribution de soupapes (B1, B2, ..., Bi, ...Bn) débouchant dans un fond de réservoir (1.1 a, 1.2a, ...1.ia, ... 1.na) du réservoir respectif (1.1, 1.2, ...1.i, ... 1.n),
qui est configuré comme un corps creux allongé (B1a, B2a, ..., Bia, ...Bna) qui est orienté essentiellement perpendiculairement et
qui possède des orifices de raccordement (17) pour relier son espace interne à chacune des canalisations (2.1, 2.2,..., 2.i, ...2.n; 3.1, 3.2, ..., 3.1, ..., 3.n; 4),
moyennant quoi un premier groupe de canalisations (2.1, 2.2, ..., 2.i, ...2.n) et un second groupe de canalisations (3.1, 3.2, ..., 3.1, ..., 3.n) sont disposés par paires (2.1, 3.1 ; 2.2, 3.2 ; ..., 2.i, 3.i, ..., 2.n, 3.n) respectivement l'un par rapport à l'autre, sur des côtés opposés du corps creux (B1a, B2a, ..., Bia, ...Bna), dans des plans parallèles l'un à l'autre et parallèles à l'axe longitudinal du corps creux, et ils passent par le corps creux (B1a, B2a, ....Bia, ...Bna) selon un angle de 90°,
et avec respectivement une soupape (V_{C} ; V_{R} ; V_{R*} ; V_{S}) conçue avec une protection anti-mélange dans la zone de son siège, qui est disposée dans chaque raccord entre la canalisation (2.1, 2.2, ..., 2.i, ...2.n; 3.1, 3.2, ..., 3.1, ..., 3.n; 4) et l'orifice de raccordement (17) associé, et commute ce raccord à proximité immédiate du corps creux (B1a, B2a, ..., Bia, ...Bna).

4. Dispositif selon la revendication 2 ou 3, **caractérisé en ce que** le corps creux (B1a, B2a, ..., Bia, ...Bna) est disposé à l'endroit le plus profond du fond de réservoir respectif (1.1a, 1.2a, ...1.ia, ...1.na).

5. Dispositif selon la revendication 4, **caractérisé en ce que** l'axe longitudinal du corps creux (B1a, B2a, ..., Bia, ...Bna) est disposé coaxialement à l'axe longitudinal du réservoir (1.1 a, 1.2a, ...1.ia, ...1.na).

6. Dispositif selon une des revendications 2 à 5, **caractérisé en ce que** le corps creux (B1a, B2a, ..., Bia, ...Bna) est conçu comme un tube cylindrique.

7. Dispositif selon une des revendications 2 à 6, **caractérisé en ce que** l'extrémité la plus inférieure du corps creux (B1a, B2a, ..., Bia, ...Bna) opposée au fond de réservoir (1.1 a, 1.2a, ...1.ia, ... 1.na) est reliée à une canalisation de nettoyage (4).

8. Dispositif selon une des revendications 2 à 7, **caractérisé en ce que** les canalisations (2.1, 2.2, ..., 2.i, ...2.n; 3.1, 3.2, ..., 3.1, ..., 3.n; 4) sont conçues respectivement comme des canalisations (remplissage F ; vidange E ; nettoyage du réservoir/ des canalisations R1, R2) continues attribuées avec la même fonction à tous les réservoirs (1.1a, 1.2a, ...1.ia, ...1.na) d'un système de réservoirs de stockage (1).

9. Dispositif selon la revendication 8, **caractérisé en ce que** les réservoirs (1.1, 1.2, ... 1.i, ...1.n) d'un système de réservoirs de stockage (1) présentent une disposition sérielle ou matricielle.

10. Dispositif selon une des revendications 2 à 9, **caractérisé en ce que** la soupape respective (V_{R}) est conçue comme une soupape à double siège avec deux éléments de fermeture relativement mobiles l'un par rapport à l'autre qui délimitent entre eux un espace creux de vidange qui est relié via au moins une voie de transmission à l'environnement de la soupape à double siège.

11. Dispositif selon une des revendications 2 à 9, **caractérisé en ce que** la soupape respective (V_{R*}) est conçue comme une soupape à double siège avec un élément de fermeture de type tiroir et une pièce de fermeture de type tiroir avec passage interne, lesquels sont configurés relativement mobiles entre eux, **en ce que** l'élément de fermeture et la pièce de fermeture forment respectivement en lien avec le boîtier de soupape deux points d'étanchéité, qui sont disposés en série et dans des plans parallèles entre eux, avec un espace creux de vidange, qui est disposé sur le côté du boîtier de soupape, est relié d'une part à l'environnement de la soupape et débouche d'autre part entre les points d'étanchéité dans un espace interne de la soupape, **en ce que** dans la position de fermeture de la soupape l'espace creux de vidange est fermé par rapport à l'espace interne de la soupape par l'élément de fermeture coopérant avec les deux points d'étanchéité, et **en ce que** l'entrée du milieu de l'espace interne à l'espace creux de vidange dans d'autres positions que dans la position de fermeture de la soupape est commandée selon l'efficacité de la même manière que dans la position de fermeture par la pièce de fermeture avec passage interne remplaçant l'élément de fermeture au niveau de son interaction avec l'espace creux de vidange.

12. Dispositif selon une des revendications 2 à 9, **caractérisé en ce que** la soupape respective (V_{C}) est configurée comme une soupape double étanchéité avec deux garnitures d'étanchéité de siège séparées sur un élément de fermeture dans le sens d'élévation, entre lesquelles est disposé un espace creux de vidange périphérique annulaire, qui est relié via au moins une voie de transmission à l'environnement de la soupape double étanchéité.

13. Dispositif selon une des revendications 10 à 12, **caractérisé en ce que** les soupapes (V_{R}, V_{R*} V_{C}) sont soumises respectivement par des mouvements d'élévation partielle de leurs éléments de fermeture (pour V_{R}, V_{R*}) et/ou de leur élément de fermeture (pour V_{C}) à un nettoyage du siège.

14. Dispositif selon une des revendications 2 à 9, **caractérisé en ce que** la soupape (V_{S}) est configurée comme une soupape en disque avec deux garnitures d'étanchéité séparées sur le pourtour d'étanchéité de l'élément de fermeture en forme de disque, entre lesquelles est disposé un espace creux de vidange périphérique annulaire, qui est relié via au moins une voie de transmission à l'environnement de la soupape en disque.

15. Dispositif selon une des revendications 2 à 14, **caractérisé en ce que**, à chaque extrémité, proche du réservoir, de la canalisation (2.1, 2.2, ..., 2.i, ...2.n; 3.1, 3.2, ..., 3.1, ..., 3.n; 4) est prévue une disposition de soupapes AV pour la poussée des canalisations.
